(19) Europäisches Patentamt
European Patent Office
Office européen des brevets

(11) **EP 3 446 258 B1**

(12) **EUROPEAN PATENT SPECIFICATION**

(45) Date of publication and mention
of the grant of the patent:
**27.03.2024 Bulletin 2024/13**

(51) International Patent Classification (IPC):
**G06N 3/092** (2023.01)    **G06N 3/0455** (2023.01)
**G06N 3/047** (2023.01)    G06N 20/00 (2019.01)
**G06N 3/006** (2023.01)

(21) Application number: **17727993.2**

(22) Date of filing: **18.05.2017**

(52) Cooperative Patent Classification (CPC):
**G06N 3/047; G06N 3/0455; G06N 3/092;**
G06N 3/006; G06N 20/00

(86) International application number:
**PCT/US2017/033221**

(87) International publication number:
**WO 2017/201222 (23.11.2017 Gazette 2017/47)**

(54) **MODEL-FREE CONTROL FOR REINFORCEMENT LEARNING AGENTS**

MODELLFREIE STEUERUNG FÜR VERSTÄRKUNGSLERNAGENTEN

COMMANDE SANS MODÈLE POUR DES AGENTS D'APPRENTISSAGE DE RENFORCEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2016   US 201662339763 P**

(43) Date of publication of application:
**27.02.2019   Bulletin 2019/09**

(73) Proprietor: **Deepmind Technologies Limited
London EC4A 3TW (GB)**

(72) Inventors:
• **BLUNDELL, Charles
London N1C 4AG (GB)**
• **URIA-MARTINEZ, Benigno
London N1C 4AG (GB)**

(74) Representative: **Marks & Clerk GST
1 New York Street
Manchester M1 4HD (GB)**

(56) References cited:
• **S. LANGE ET AL: "Autonomous reinforcement learning on raw visual input data in a real world application", PROCEEDINGS OF THE 2012 INTERNATIONAL JOINT CONFERENCE ON NEURAL NETWORKS (IJCNN'12), 10 June 2012 (2012-06-10), XP032210518, DOI: 10.1109/IJCNN.2012.6252823**
• **A.-M. Farahmand et al: "Classification-based approximate policy iteration: experiments and extended discussions", arXiv:1407.0449v1, 2 July 2014 (2014-07-02), XP055396390, Retrieved from the Internet: URL:https://arxiv.org/abs/1407.0449v1 [retrieved on 2017-08-03]**
• **R. FONTENEAU ET AL: "Batch mode reinforcement learning based on the synthesis of artificial trajectories", ANNALS OF OPERATIONS RESEARCH, vol. 208, no. 1, 15 November 2012 (2012-11-15), pages 383-416, XP055396393, DOI: 10.1007/s10479-012-1248-5**
• **J. A. MARTÍN H. ET AL: "Robust high performance reinforcement learning through weighted k-nearest neighbors", NEUROCOMPUTING, vol. 74, no. 8, 20 October 2010 (2010-10-20), pages 1251-1259, XP028163017, DOI: 10.1016/J.NEUCOM.2010.07.027**

**(Cont. next page)**

- A. AGOSTINI, E. CELAYA: "Reinforcement learning with a Gaussian mixture model", PROCEEDINGS OF THE 2010 INTERNATIONAL JOINT CONFERENCE ON NEURAL NETWORKS (IJCNN'10), 18 July 2010 (2010-07-18), XP031771340, DOI: 10.1109/IJCNN.2010.5596306
- D. Abel et al: "Exploratory gradient boosting for reinforcement learning in complex domains", arXiv:1603.04119v1, 14 March 2016 (2016-03-14), XP080689344, Retrieved from the Internet: URL:https://arxiv.org/abs/1603.04119v1 [retrieved on 2017-08-03]
- T. JUNG, D. POLANI: "Kernelizing LSPE(lamda)", PROCEEDINGS OF THE 2007 IEEE INTERNATIONAL SYMPOSIUM ON APPROXIMATE DYNAMIC PROGRAMMING AND REINFORCEMENT LEARNING (ADPRL'07), 1 April 2007 (2007-04-01), pages 338-345, XP031606499, DOI: 10.1109/ADPRL.2007.368208

**Description**

BACKGROUND

This specification relates to reinforcement learning.

In a reinforcement learning system, an agent interacts with an environment by performing actions that are selected by the reinforcement learning system in response to receiving observations that characterize the current state of the environment.

Some reinforcement learning systems select the action to be performed by the agent in response to receiving a given observation in accordance with an output of a neural network.

Neural networks are machine learning models that employ one or more layers of nonlinear units to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Lange et al; Autonomous reinforcement learning on raw visual input data in a real world application; IJCNN'12 (Proc); pub. in 2012, discusses a reinforcement learning agent which not only learns a control policy but also how to extract relevant information from a high-dimensional input stream.

Farahmand et al; Classification-based approximate policy iteration: experiments and extended discussions; arXiv:1407.0449v1; 2014, discusses an approximate policy iteration framework that takes a policy space, a distribution over states and a number of iterations as inputs, and returns a policy whose performance should be close to the best policy in the policy space.

Fonteneau et al; Batch mode reinforcement learning based on the synthesis of artificial trajectories; Ann. Oper. Res, vol. 208(1), pp. 383-416; 2012, discusses the use of a k-nearest neighbours regression algorithm in the estimation of the best policy for a reinforcement learning agent.

Martin et al; Robust high performance reinforcement learning through weighted k-nearest neighbors; Neurocomputing, 74(8), 1251-1259; 2010, discusses the use of a k-nearest neighbour scheme in the context of TD-reinforcement learning.

SUMMARY

This specification describes how a system implemented as computer programs on one or more computers in one or more locations can select an action to be performed by an agent interacting with an environment from a predetermined set of actions using return data maintained by the system.

The invention is set out in the appended set of claims.

BRIEF DESCRIPTION OF THE DRAWINGS

FIG. 1 shows an example reinforcement learning system.
FIG. 2 is a flow diagram of an example process for selecting an action to be performed by an agent.
FIG. 3 is a flow diagram of an example process for selecting an action to be performed by an agent in response to a new observation.

Like reference numbers and designations in the various drawings indicate like elements.

DETAILED DESCRIPTION

This specification generally describes a reinforcement learning system that selects actions to be performed by a reinforcement learning agent interacting with an environment. In order to interact with the environment, the agent receives data characterizing the current state of the environment and performs an action from an action space in response to the received data. Data characterizing a state of the environment will be referred to in this specification as an observation.

In an example not within the scope of the claims, the environment is a simulated environment and the agent is implemented as one or more computers interacting with the simulated environment. For example, the simulated environment may be a video game and the agent may be a simulated user playing the video game.

The environment is a real-world environment and the agent is a mechanical agent interacting with the real-world environment. For example, the agent may be a robot interacting with the environment to accomplish a specific task. As another example, the agent may be an autonomous or semi-autonomous vehicle navigating through the environment. In these cases, the observation can be data captured by one or more sensors of the mechanical agent as it interacts with the environment, e.g., a camera, a lidar sensor, a temperature sensor, and so on.

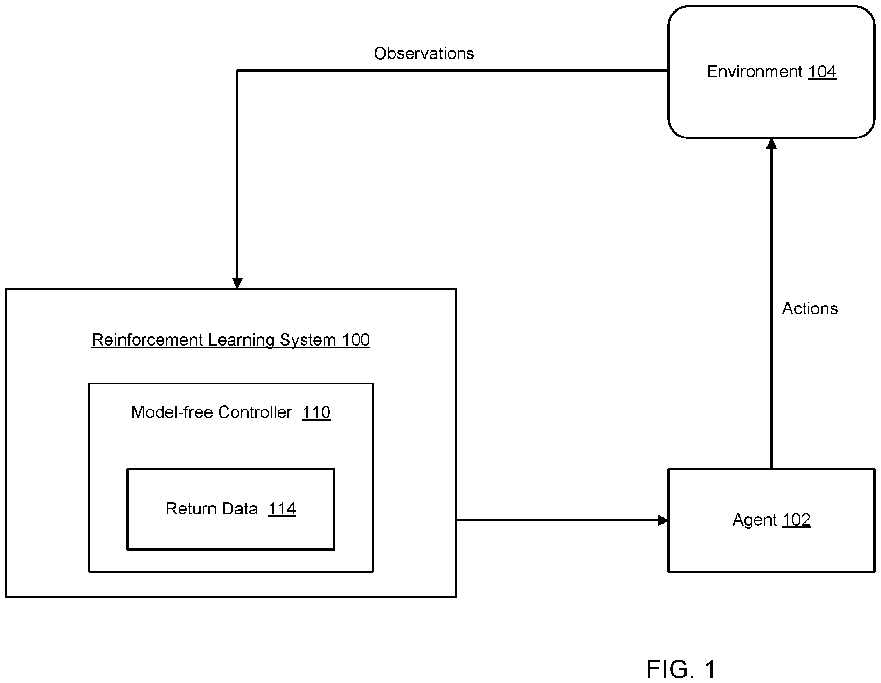

FIG. 1 shows an example reinforcement learning system 100. The reinforcement learning system 100 is an example of a system implemented as computer programs on one or more computers in one or more locations in which the systems, components, and techniques described below are implemented.

The reinforcement learning system 100 selects actions to be performed by a reinforcement learning agent 102 interacting with an environment 104. That is, the reinforcement learning system 100 receives observations, with each observation characterizing a respective state of the environment 104, and, in response to each observation, selects an action from an action space to be performed by the reinforcement learning agent 102 in response to the observation. After the agent 102 performs a selected action, the environment 104 transitions to a new state and the system 100 receives another observation characterizing the next state of the environment 104 and a reward. The reward can be a numeric value that is received by the system 100 or the agent 102 from the environment 104 as a result of the agent 102 performing the selected action.

To select an action to be performed by the agent 102 in response to an observation, the reinforcement learning system 100 includes a model-free controller 110. Generally, the model-free controller 110 can rapidly record and replay a sequence of actions that were performed by the agent 102 and so far yielded the highest return. In some cases, the model-free controller 110 is a non-parametric model. In some other cases, the model-free controller 110 includes a neural network. In particular, the controller 110 maintains return data 114 that maps each of multiple observation-action pairs to a respective return. An observation-action pair includes an observation characterizing a state of the environment 104 and an action that is performed by the agent 102 in response to the observation. The respective return mapped to by each of the observation-action pairs is a time-discounted combination, e.g., a sum or an average, of rewards received by the system 100 or the agent 102 after the agent 102 performed the action in the observation-action pair in response to the observation in the observation-action pair.

In some implementations, the controller 110 initializes the return data 114 with initial mappings by randomly selecting actions to be performed by the agent 102 in response to observations, e.g., until each action in a predetermined set of actions has been performed more than a threshold number of times or until a threshold number of total actions have been performed. The controller 110 then collects returns that resulted from the agent 102 performing the randomly selected actions and maps each observation-action pair with a respective return.

In some implementations, the return data 114 can be stored as a growing table, indexed by observation-action pairs. A value stored at a particular observation-action pair index in the growing table includes a highest return that the system 100 ever obtained as a result of the agent 102 performing the action in the particular observation-action pair in response to the observation in the particular observation-action pair.

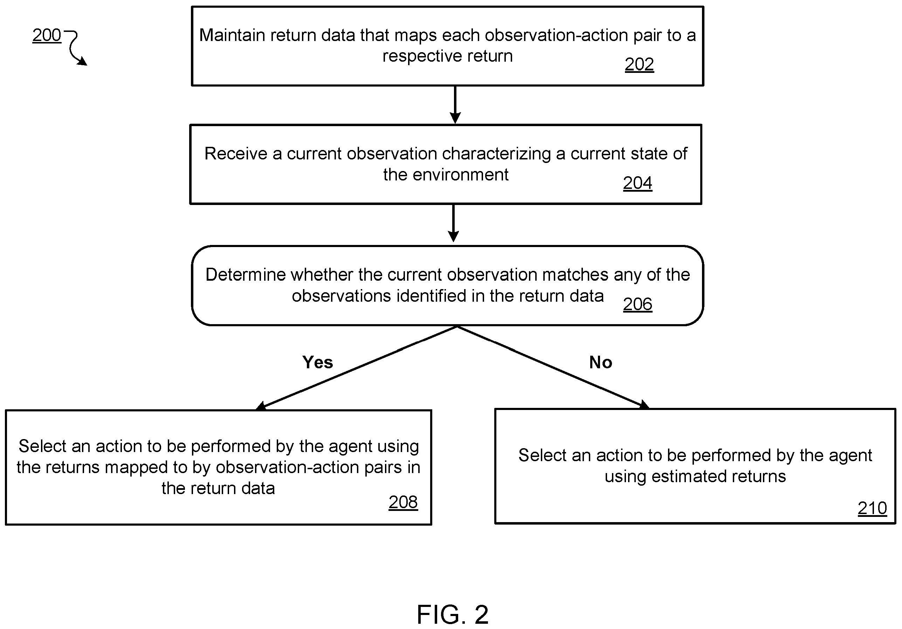

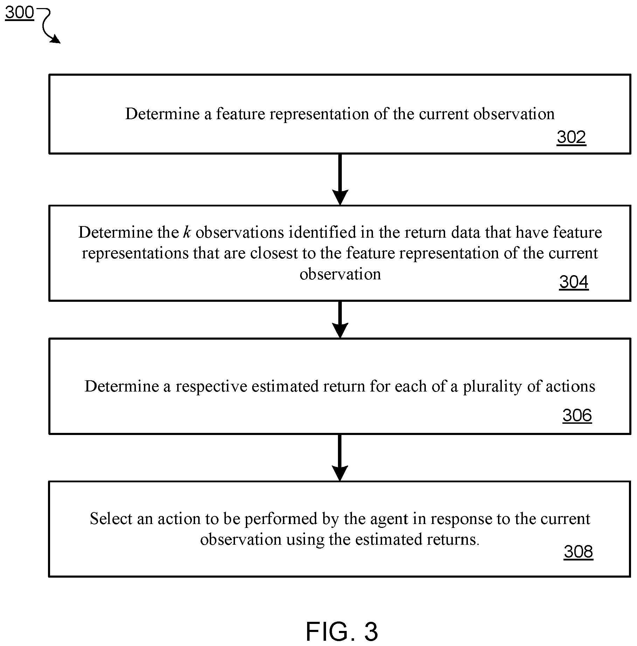

Each time the system 100 receives a current observation charactering a current state of the environment 104, the controller 110 selects an action to be performed by the agent 102 in response to the current observation based on the return data 114. Selecting an action based on the return data 114 is described in more detail below with reference to FIG. 2 and FIG. 3.

FIG. 2 is a flow diagram of an example process 200 for selecting an action to be performed by an agent based on return data. For convenience, the process 200 will be described as being performed by a system of one or more computers located in one or more locations. For example, a reinforcement learning system, e.g., the reinforcement learning system 100 of FIG. 1, appropriately programmed in accordance with this specification, can perform the process 200.

The system maintains return data that maps each of a plurality of observation-action pairs to a respective return (step 202). As described above, the return data maps each of multiple observation-action pairs to a respective return.

The system receives a current observation characterizing a current state of the environment (step 204).

After receiving the current observation characterizing the current state of the environment, the system determines whether the current observation matches any of the observations in the observation-action pairs in the return data (step 206). In some implementations, the current observation matches another observation if it is the same as the other observation. In some other implementations, the current observation matches another observation if it is within a threshold distance of the other observation according to an appropriate distance metric (e.g., Euclidian distance).

In response to determining that the current observation matches a first observation that is identified in the return data, the system selects an action to be performed by the agent in response to the current observation using the returns mapped to by observation-action pairs in the return data that include the first observation (step 208).

In some implementations, the system selects an action that, according to the return data, resulted in a highest return of any action when performed by the agent in response to the first observation. That is, the system identifies, from the observation-action pairs in the return data that include the first observation, the pair that is mapped to the highest return and selects the action from the identified pair.

In some other implementations, the system selects an action that, according to the return data, resulted in a highest return of any action when performed by the agent in response to the first observation with probability 1 -ε, and selects an action randomly from the predetermined set of actions with probability ε, where ε is a predetermined constant.

In response to determining that the current observation does not match any of the observations identified in the return data, i.e., the current observation is a new observation, the system selects an action to be performed by the agent using estimated returns (step 210). The process for selecting an action to be performed by the agent in response to a new observation is described in more detail below with reference to FIG. 3.

After the agent performs the selected action in response to the current observation, i.e., in response to being instructed or otherwise caused to perform the action by the system, the system receives a new return resulting from the agent performing the selected action.

The system then receives a next observation and continues determining whether the next observation matches any of the observations identified in the return data and selecting an action to be performed by the agent by following the above process.

In some implementations, the system can update the return data each time the system received a new return. In some other implementations, the system can update the return data only after receiving a predetermined number of new returns.

The system can update the return data using the new return resulting from the agent performing the selected action in response to the current observation as follows. When the current observation matches a first observation identified in the return data, the system determines whether the new return is larger than an existing return mapped to by the selected action - current observation pair, i.e., the return resulting from performing the selected action in response to the current observation according to the return data. When the new return is larger than the existing return, the system replaces the existing return with the new return in the return data. When the current observation does not match a first observation identified in the return data, the system updates the return data to map a current observation - selected action pair to the new return, i.e., by adding a new mapping to the return data.

In some implementations, after updating the return data, the system determines that a number of mappings in the return data has reached a maximum size and, in response, the system removes a least recently updated mapping from the return data.

FIG. 3 is a flow diagram of an example process 300 for selecting an action to be performed by an agent in response to a new observation. For convenience, the process 300 will be described as being performed by a system of one or more computers located in one or more locations. For example, a reinforcement learning system, e.g., the reinforcement learning system 100 of FIG. 1, appropriately programmed in accordance with this specification, can perform the process 300.

When the system receives a current observation and determines that the current observation does not match any of the observations identified in the return data, the system determines a feature representation of the current observation (step 302). For example, the feature representation of the current observation can be the current observation or, alternatively, a function of the current observation.

In some implementations, to reduce memory and computational requirements, the system determines a feature representation of the current observation by projecting the current observation into a smaller-dimensional space. For example, the system applies a random projection matrix to the current observation as follows:

$$\phi : x \rightarrow \mathbf{A}x,$$

where $\phi$ is the feature representation of the current observation $x$,

$$\mathbf{A} \in \mathbb{R}^{F \times D}$$

is a random projection matrix, $F$ is a projected dimension with

$$F \ll D,$$

where $D$ is the dimensionality of the current observation.

In some other implementations, the system determines the feature representation of the current observation by processing the current observation using a variational auto-encoder (VAE) model to generate a latent representation of the current observation, and using the latent representation of the current observation as the feature representation of the current observation. Generally, a VAE model includes two neural networks: an encoder neural network that receives observations and maps them into corresponding representations of the observations, and a decoder neural network that receives representations and approximately recovers the observations corresponding to the representations. For example, an encoder neural network may include convolutional neural network layers followed by a fully connected neural network layer from which a linear neural network layer outputs representations of the received observations. A decoder neural network generally mirrors the structure of its corresponding encoder neural network. For example, the decoder neural network corresponding to the above-described encoder neural network includes a fully connected neural network layer followed by reverse convolutional neural network layers.

Next, the system determines the $k$ observations identified in the return data that have feature representations that are closest to the feature representation of the current observation (step 304). For example, the system determines the $k$ observations identified in the return data that have feature representations that have a smallest Euclidian distance to the feature representation of the current observation. Generally, $k$ is a predetermined integer that is greater than one and is much smaller than the total number of observations identified in the return data. In some cases, $k$ is an integer that is in the range of five to fifty, inclusive.

The system then determines a respective estimated return for each of multiple actions in the predetermined set of actions from returns mapped to by observation-action pairs in the return data that include the action and any one of the *k* observations (step 306). That is, for each action *a* in the multiple actions, the system determines a set of observation-action pairs that include one of the *k* observations and action *a.* The system then determines an average or other measure of central tendency of returns mapped to by the set of observation-action pairs in the return data. For example, the system can sum up the returns mapped to by the set of observation-action pairs in the return data and divide the sum by the number of pairs in the set of observation-action pairs.

After determining an estimated return for each of the multiple actions, the system selects an action to be performed by the agent in response to the current observation using the estimated returns (step 308). In some implementations, the system selects an action from the multiple actions that has the highest estimated return. In some other implementations, the system selects an action from the plurality of actions that has the highest estimated return with probability 1 - ε and selects an action randomly from the predetermined set of actions with probability ε.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory program carrier for execution by, or to control the operation of, data processing apparatus. Alternatively, or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented as a graphics processing unit (GPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims, unless it is otherwise defined by the claims, can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

**Claims**

1. A computer-implemented method for selecting an action from a predetermined set of actions to be performed by a mechanical agent interacting with a real-world environment, the method comprising:

maintaining return data that maps each of a plurality of observation-action pairs to a respective return,

> wherein the action in each observation-action pair is an action that was performed by the mechanical agent in response to the observation in the observation-action pair, and wherein the respective return mapped to by each of the observation-action pairs is a return that resulted from the mechanical agent performing the action in the observation-action pair in response to the observation in the observation-action pair;

receiving a current observation characterizing a current state of the real-world environment;
determining whether the current observation matches any of the observations identified in the return data, wherein the current observation matches any of the observations identified in the return data if it is the same as any of the observations identified in the return data or if it is within a threshold distance of any of the observations identified in the return data;
in response to determining that the current observation matches a first observation identified in the return data, selecting an action to be performed by the mechanical agent in response to the current observation using the returns mapped to by observation-action pairs in the return data that include the first observation, wherein selecting the action to be performed by the agent using the returns mapped to by observation-action pairs in the return data that include the first observation comprises:

> (i) selecting an action that, according to the return data, resulted in a highest return of any action when performed by the mechanical agent in response to the first observation; or
> (ii) selecting an action that, according to the return data, resulted in a highest return of any action when performed by the mechanical agent in response to the first observation with probability 1 -ε; and selecting an action randomly from the predetermined set of actions with probability ε; and

in response to determining that the current observation does not match any of the observations identified in the return data:

> determining a feature representation of the current observation;
> determining the $k$ observations identified in the return data that have feature representations that are closest to the feature representation of the current observation, wherein $k$ is an integer greater than one;
determining a respective estimated return for each of a plurality of actions in the predetermined set of actions from returns mapped to by observation-action pairs in the return data that include the action and any one of the $k$ observations; and
selecting the action to be performed by the mechanical agent in response to the current observation using the estimated returns, selecting the action to be performed by the agent using the estimated returns comprises:

> (i) selecting an action from the plurality of actions that has the highest estimated return; or
> (ii) selecting an action from the plurality of actions that has the highest estimated return with probability 1 -ε; and selecting an action randomly from the predetermined set of actions with probability ε.

2. The method of claim 1, wherein determining a respective estimated return comprises, for each of the plurality of actions:
determining an average of the returns mapped to by observation-action pairs in the return data that include the action and any one of the $k$ observations.

3. The method of any one of claims 1 or 2, wherein determining the $k$ observations identified in the return data that have feature representations that are closest to the feature representation of the current observation comprises:

> determining the $k$ observations identified in the return data that have feature representations that have a smallest Euclidian distance to the feature representation of the current observation; and/or
> wherein the feature representation of the current observation is the current observation.

4. The method of any one of claims 1 to 3, wherein determining the feature representation of the current observation comprises:

> projecting the current observation into a smaller-dimensional space; and optionally
> wherein projecting the current observation into the smaller-dimensional space comprises applying a random projection matrix to the current observation.

5. The method of any one of claims 1 to 4, wherein determining the feature representation of the current observation comprises:

processing the current observation using a variational auto-encoder model to generate a latent representation of the current observation; and using the latent representation of the current observation as the feature representation of the current observation.

6. The method of any one of claims 1-4, further comprising:

receiving a new return resulting from the mechanical agent performing the selected action in response to the current observation; and updating the return data using the new return; and optionally wherein, when the current observation matches a first observation identified in the return data, updating the return data using the new return comprises:

determining whether the new return is larger than an existing return resulting from performing the selected action in response to the first observation according to the return data; and when the new return is larger than the existing return, replacing the existing return with the new return in the return data.

7. The method of claim 6, wherein, when the current observation does not match a first observation identified in the return data, updating the return data using the new return comprises:
updating the return data to map a current observation - selected action pair to the new return.

8. The method of any one of claims 1-7, further comprising:

determining that a number of mappings in the return data has reached a maximum size and, in response, removing a least recently updated mapping from the return data; and/or initializing the return data with initial mappings by randomly selecting actions to be performed by the agent until each action in the predetermined set of actions has been performed more than a threshold number of times; and/or wherein the returns are discounted sums of rewards received by the agent in response to performing actions.

9. A computer storage medium encoded with instructions that, when executed by one or more computers, cause the one or more computers to perform the method of any one of claims 1-8.

10. A system comprising one or more computers and one or more computer storage media according to claim 9.

**Patentansprüche**

1. Computerimplementiertes Verfahren zum Auswählen einer Aktion aus einem vorbestimmten Satz von Aktionen, die von einem mechanischen Agenten durchgeführt werden sollen, der mit einer realen Umgebung interagiert, wobei das Verfahren Folgendes umfasst:

Verwalten von Rückgabedaten, die jedes einer Vielzahl von Beobachtungs-Aktions-Paaren einer jeweiligen Rückgabe zuordnen, wobei die Aktion in jedem Beobachtungs-Aktions-Paar eine Aktion ist, die von dem mechanischen Agenten als Reaktion auf die Beobachtung in dem Beobachtungs-Aktions-Paar durchgeführt wurde, und wobei die jeweilige Rückgabe, die durch jedes der Beobachtungs-Aktions-Paare zugeordnet wird, eine Rückgabe ist, die daraus resultiert, dass der mechanische Agent die Aktion in dem Beobachtungs-Aktions-Paar als Reaktion auf die Beobachtung in dem Beobachtungs-Aktions-Paar durchführt; Empfang einer aktuellen Beobachtung, die einen aktuellen Zustand der realen Umgebung charakterisiert; Bestimmen, ob die aktuelle Beobachtung mit einer der in den Rückgabedaten identifizierten Beobachtungen übereinstimmt, wobei die aktuelle Beobachtung mit einer der in den Rückgabedaten identifizierten Beobachtungen übereinstimmt, wenn sie mit einer jeglichen der in den Rückgabedaten identifizierten Beobachtungen übereinstimmt oder wenn sie innerhalb eines Schwellenabstands zu einer jeglichen der in den Rückgabedaten identifizierten Beobachtungen liegt; als Reaktion auf das Bestimmen, dass die aktuelle Beobachtung mit einer ersten Beobachtung übereinstimmt, die in den Rückgabedaten identifiziert wurde, Auswählen einer Aktion, die von dem mechanischen Agenten als Reaktion auf die aktuelle Beobachtung durchgeführt werden soll, unter Verwendung der Rückgaben, die durch Beobachtungs-Aktions-Paare in den Rückgabedaten zugeordnet werden, die die erste Beobachtung einschließen, wobei das Auswählen der Aktion, die von dem Agenten durchgeführt werden soll, unter Verwendung der Rückgaben, die durch Beobachtungs-Aktions-Paare in den Rückgabedaten zugeordnet werden, die die erste Beobachtung einschließen, Folgendes umfasst:

(i) Auswählen einer Aktion, die gemäß den Rückgabedaten zu einer höchsten Rückgabe jeglicher Aktion führte, wenn sie von dem mechanischen Agenten als Reaktion auf die erste Beobachtung durchgeführt wurde; oder

(ii) Auswählen einer Aktion, die gemäß den Rückgabedaten zu einer höchsten Rückgabe jeglicher Aktion führte, wenn sie von dem mechanischen Agenten als Reaktion auf die erste Beobachtung mit einer Wahrscheinlichkeit von 1-ε durchgeführt wurde; und zufälliges Auswählen einer Aktion aus dem vorgegebenen Satz von Aktionen mit einer Wahrscheinlichkeit von ε; und als Reaktion auf das Bestimmen, dass die aktuelle Beobachtung mit keiner der in den Rückgabedaten identifizierten Beobachtungen übereinstimmt:

Bestimmen einer Merkmalsdarstellung der aktuellen Beobachtung;
Bestimmen der $k$ Beobachtungen, die in den Rückgabedaten identifiziert wurden, die Merkmalsdarstellungen aufweisen, die der Merkmalsdarstellung der aktuellen Beobachtung am nächsten liegen, wobei $k$ eine ganze Zahl größer als eins ist;
Bestimmen einer jeweiligen geschätzten Rückgabe für jede einer Vielzahl von Aktionen in dem vorbestimmten Satz von Aktionen aus Rückgaben, die durch Beobachtungs-Aktions-Paare in den Rückgabedaten zugeordnet werden, die die Aktion und jegliche der $k$ Beobachtungen einschließen; und
Auswählen der von dem mechanischen Agenten auszuführenden Aktion als Reaktion auf die aktuelle Beobachtung unter Verwendung der geschätzten Rückgaben, wobei das Auswählen der von dem Agenten auszuführenden Aktion unter Verwendung der geschätzten Rückgabe Folgendes umfasst:

(i) Auswählen einer Aktion aus der Vielzahl von Aktionen, die die höchste geschätzte Rückgabe aufweist; oder
(ii) Auswählen einer Aktion aus der Vielzahl von Aktionen, die die höchste geschätzte Rückgabe mit einer Wahrscheinlichkeit von 1-ε aufweist; und zufälliges Auswählen einer Aktion aus dem vorgegebenen Satz von Aktionen mit einer Wahrscheinlichkeit von ε.

2. Verfahren nach Anspruch 1, wobei das Bestimmen einer jeweiligen geschätzten Rückgabe für jede der Vielzahl von Aktionen Folgendes umfasst: Bestimmen eines Durchschnitts der Rückgaben, die durch Beobachtungs-Aktions-Paare in den Rückgabedaten zugeordnet werden, die die Aktion und jegliche der $k$ Beobachtungen einschließen.

3. Verfahren nach einem der Ansprüche 1 oder 2, wobei das Bestimmen der $k$ Beobachtungen, die in den Rückgabedaten identifiziert wurden, die Merkmalsdarstellungen aufweisen, die der Merkmalsdarstellung der aktuellen Beobachtung am nächsten liegen, Folgendes umfasst:

Bestimmen der $k$ Beobachtungen, die in den Rückgabedaten identifiziert wurden, die Merkmalsdarstellungen aufweisen, die einen kleinsten Euklidischen Abstand zu der Merkmalsdarstellung der aktuellen Beobachtung haben; und/oder
wobei die Merkmalsdarstellung der aktuellen Beobachtung die aktuelle Beobachtung ist.

4. Verfahren nach einem der Ansprüche 1 bis 3, wobei das Bestimmen der Merkmalsdarstellung der aktuellen Beobachtung Folgendes umfasst:

Projizieren der aktuellen Beobachtung in einen kleiner-dimensionalen Raum; und wahlweise, wobei das Projizieren der aktuellen Beobachtung in den kleiner-dimensionalen Raum das Anwenden einer zufälligen Projektionsmatrix auf die aktuelle Beobachtung umfasst.

5. Verfahren nach einem der Ansprüche 1 bis 4, wobei das Bestimmen der Merkmalsdarstellung der aktuellen Beobachtung Folgendes umfasst:

Verarbeiten der aktuellen Beobachtung unter Verwendung eines Variations-Autokodiermodells, um eine latente Darstellung der aktuellen Beobachtung zu erzeugen; und
Verwenden der latenten Darstellung der aktuellen Beobachtung als Merkmalsdarstellung der aktuellen Beobachtung.

6. Verfahren nach einem der Ansprüche 1 bis 4, ferner umfassend:

Empfangen einer neuen Rückgabe, die sich daraus ergibt, dass der mechanische Agent die ausgewählte Aktion als Reaktion auf die aktuelle Beobachtung durchführt; und

Aktualisieren der Rückgabedaten unter Verwendung der neuen Rückgabe; und wahlweise wobei, wenn die aktuelle Beobachtung mit einer ersten in den Rückgabedaten identifizierten Beobachtung übereinstimmt, das Aktualisieren der Rückgabedaten unter Verwendung der neuen Rückgabe Folgendes umfasst:

Bestimmen, ob die neue Rückgabe größer ist als eine bestehende Rückgabe, die sich aus dem Durchführen der ausgewählten Aktion als Reaktion auf die erste Beobachtung gemäß der Rückgabedaten ergibt; und wenn die neue Rückgabe größer ist als die bestehende Rückgabe, Ersetzen der bestehenden Rückgabe in den Rückgabedaten durch die neue Rückgabe.

7. Verfahren nach Anspruch 6, wobei, wenn die aktuelle Beobachtung nicht mit einer ersten Beobachtung übereinstimmt, die in den Rückgabedaten identifiziert wurde, das Aktualisieren der Rückgabedaten unter Verwendung der neuen Rückgabe Folgendes umfasst:
Aktualisieren der Rückgabedaten, um ein aktuelles Paar aus Beobachtung und ausgewählter Aktion der neuen Rückgabe zuzuordnen.

8. Verfahren nach einem der Ansprüche 1 bis 7, ferner umfassend:

Bestimmen, dass eine Anzahl von Zuordnungen in den Rückgabedaten eine maximale Größe erreicht hat, und als Reaktion darauf Entfernen einer vor längster Zeit aktualisierten Zuordnung aus den Rückgabedaten; und/oder
Initialisieren der Rückgabedaten mit anfänglichen Zuordnungen durch zufälliges Auswählen von Aktionen, die von dem Agenten ausgeführt werden sollen, bis jede Aktion in dem vorbestimmten Satz von Aktionen mehr als eine Schwellenanzahl von Malen ausgeführt worden ist; und/oder
wobei die Rückgaben reduzierte Summen von Belohnungen sind, die der Agent als Reaktion auf das Durchführen von Aktionen erhält.

9. Computerspeichermedium, das mit Anweisungen kodiert ist, die, wenn sie von einem oder mehreren Computern ausgeführt werden, den einen oder die mehreren Computer veranlassen, das Verfahren nach einem der Ansprüche 1 bis 8 durchzuführen.

10. System, umfassend einen oder mehrere Computer und eine oder mehrere Computerspeichermedien nach Anspruch 9.

## Revendications

1. Procédé mise en oeuvre par ordinateur de sélection d'une action parmi un ensemble prédéterminé d'actions qui doivent être effectuées par un agent mécanique interagissant avec un environnement réel, le procédé comprenant :

le maintien de données de retour qui mettent en correspondance chaque paire d'une pluralité de paires observation-action à un retour respectif, dans lequel l'action de chaque paire observation-action est une action qui a été réalisée par l'agent mécanique en réponse à l'observation de la paire observation-action, et
dans lequel le retour respectif mis en correspondance par chacune des paires observation-action est un retour résultant de l'exécution, par l'agent mécanique, de l'action dans la paire observation-action en réponse à l'observation dans la paire observation-action ;
la réception d'une observation actuelle caractérisant un état actuel de l'environnement réel ;
la détermination si l'observation actuelle correspond à l'une quelconque des observations identifiées dans les données de retour, l'observation actuelle correspondant à l'une quelconque des observations identifiées dans les données de retour si elle est identique à l'une quelconque des observations identifiées dans les données de retour ou si elle se trouve à moins d'une distance seuil de l'une quelconque des observations identifiées dans les données de retour ;
en réponse à la détermination que l'observation actuelle correspond à une première observation identifiée dans les données de retour, la sélection d'une action qui doit être effectuée par l'agent mécanique en réponse à l'observation actuelle en utilisant les retours mis en correspondance par des paires observation-action dans les données de retour qui incluent la première observation, dans lequel la sélection de l'action qui doit être effectuée par l'agent en utilisant les retours mis en correspondance par les paires observation-action dans les données de retour qui incluent la première observation comprend :

(i) la sélection d'une action qui, selon les données de retour, a donné lieu à un retour le plus élevé de toutes les actions lorsqu'elle est effectuée par l'agent mécanique en réponse à la première observation ; ou
(ii) la sélection d'une action qui, selon les données de retour, a donné lieu à un retour le plus élevé de toutes les actions lorsqu'elle a été effectuée par l'agent mécanique en réponse à la première observation avec une probabilité de 1-ε ; et la sélection d'une action au hasard parmi l'ensemble prédéterminé d'actions, avec une probabilité ε ; et, en réponse à la détermination que l'observation actuelle ne correspond à aucune des observations identifiées dans les données de retour :

la détermination d'une représentation de caractéristique de l'observation actuelle ;

la détermination des k observations identifiées dans les données de retour qui ont des représentations de caractéristiques qui sont les plus proches de la représentation de caractéristiques de l'observation actuelle, dans lequel $k$ est un entier supérieur à un ;

la détermination d'un retour estimé respectif pour chacune d'une pluralité d'actions de l'ensemble prédéterminé d'actions à partir des retours mis en correspondances par des paires observation-action dans les données de retour qui incluent l'action et l'une quelconque des k observations ; et

la sélection de l'action qui doit être effectuée par l'agent mécanique en réponse à l'observation actuelle en utilisant les retours estimés, la sélection de l'action qui doit être effectuée par l'agent en utilisant les retours estimés comprenant :

(i) la sélection d'une action parmi la pluralité d'actions qui a le retour estimé le plus élevé ; ou

(ii) la sélection d'une action parmi la pluralité d'actions qui a le retour estimé le plus élevé avec une probabilité de 1-ε ; et la sélection d'une action au hasard parmi l'ensemble prédéterminé d'actions avec une probabilité ε.

**2.** Procédé selon la revendication 1, dans lequel la détermination d'un retour estimé respectif comprend, pour chaque action de la pluralité d'actions :
la détermination d'une moyenne des retours mis en correspondance par des paires observation-action dans les données de retour qui incluent l'action et l'une quelconque des k observations.

**3.** Procédé selon l'une quelconque des revendications 1 ou 2, dans lequel la détermination des $k$ observations identifiées dans les données de retour qui ont des représentations de caractéristiques les plus proches de la représentation de caractéristiques de l'observation actuelle comprend :

la détermination des $k$ observations identifiées dans les données de retour qui ont des représentations de caractéristiques qui présentent une plus petite distance euclidienne par rapport à la représentation de caractéristiques de l'observation actuelle ; et/ou
dans lequel la représentation de caractéristiques de l'observation actuelle est l'observation actuelle.

**4.** Procédé selon l'une quelconque des revendications 1 à 3, dans lequel la détermination de la représentation de caractéristiques de l'observation actuelle comprend :

la projection de l'observation actuelle dans un espace à plus petite dimension ; et facultativement,
dans lequel la projection de l'observation actuelle dans l'espace à plus petite dimension comprend l'application d'une matrice de projection aléatoire à l'observation actuelle.

**5.** Procédé selon l'une quelconque des revendications 1 à 4, dans lequel la détermination de la représentation de caractéristiques de l'observation actuelle comprend :

le traitement de l'observation actuelle en utilisant un modèle d'auto-encodeur à variations pour générer une représentation latente de l'observation actuelle ; et
l'utilisation de la représentation latente de l'observation actuelle en tant que représentation de caractéristiques de l'observation actuelle.

**6.** Procédé selon l'une quelconque des revendications 1 à 4, comprenant en outre :

la réception d'un nouveau retour résultant de l'exécution, par l'agent mécanique, de l'action sélectionnée en réponse à l'observation actuelle ; et
la mise à jour des données de retour en utilisant le nouveau retour ; et facultativement
dans lequel, lorsque l'observation actuelle correspond à une première observation identifiée dans les données de retour, la mise à jour des données de retour en utilisant le nouveau retour comprend :

la détermination si le nouveau retour est supérieur à un retour existant résultant de l'exécution de l'action sélectionnée en réponse à la première observation, en fonction des données de retour ; et

lorsque le nouveau retour est plus important que le retour existant, le remplacement du retour existant par le nouveau retour dans les données de retour.

7. Procédé selon l'une quelconque des revendications 6, dans lequel lorsque l'observation actuelle ne correspond pas à une première observation identifiée dans les données de retour, la mise à jour des données de retour en utilisant le nouveau retour comprend :

la mise à jour des données de retour pour mettre en correspondance une paire observation actuelle-action sélectionnée avec le nouveau retour.

8. Procédé selon l'une quelconque des revendications 1 à 7, comprenant en outre :

la détermination qu'un nombre de mises en correspondances dans les données de retour a atteint une taille maximale et, en réponse, la suppression d'une mise en correspondante la moins récemment mise à jour parmi les données de retour ; et/ou

l'initialisation des données de retour avec des mises en correspondances initiales en sélectionnant au hasard des actions à effectuer par l'agent jusqu'à ce que chaque action de l'ensemble prédéterminé d'actions ait été effectuée plus d'un nombre seuil de fois ; et/ou

dans lequel les retours sont des sommes actualisées de récompenses reçues par l'agent en réponse à l'exécution d'actions.

9. Support de stockage informatique codé avec des instructions qui, lorsqu'elles sont exécutées par un ou plusieurs ordinateurs, amènent le ou les ordinateurs à exécuter le procédé selon l'une quelconque des revendications 1 à 8.

10. Système comprenant un ou plusieurs ordinateurs et un ou plusieurs supports de stockage informatique selon la revendication 9.

Observations

Environment 104

Reinforcement Learning System 100

Model-free Controller 110

Return Data 114

Actions

Agent 102

FIG. 1

Maintain return data that maps each observation-action pair to a respective return  202

Receive a current observation characterizing a current state of the environment  204

Determine whether the current observation matches any of the observations identified in the return data  206

Yes

Select an action to be performed by the agent using the returns mapped to by observation-action pairs in the return data  208

No

Select an action to be performed by the agent using estimated returns  210

200

FIG. 2

Determine a feature representation of the current observation

302

Determine the $k$ observations identified in the return data that have feature representations that are closest to the feature representation of the current observation

304

Determine a respective estimated return for each of a plurality of actions

306

Select an action to be performed by the agent in response to the current observation using the estimated returns.

308

FIG. 3

EP 3 446 258 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **LANGE et al.** Autonomous reinforcement learning on raw visual input data in a real world application. *UCNN'12 (Proc),* 2012
- **FARAHMAND et al.** Classification-based approximate policy iteration: experiments and extended discussions. *arXiv:1407.0449v1,* 2014
- **FONTENEAU et al.** Batch mode reinforcement learning based on the synthesis of artificial trajectories. *Ann. Oper. Res,* 2012, vol. 208 (1), 383-416
- **MARTIN et al.** Robust high performance reinforcement learning through weighted k- nearest neighbors. *Neurocomputing,* 2010, vol. 74 (8), 1251-1259